# EUROPEAN PATENT SPECIFICATION

(11) **EP 3 032 152 B1**
(45) Date of publication and mention of the grant of the patent: **03.01.2018**
(21) Application number: 15196176.0
(22) Date of filing: 25.11.2015
(51) Int. Cl.: F16K 47/02, F16K 31/08, F16K 31/126, B67C 3/28, F16K 7/17

(54) **A DISPENSING VALVE**
DOSIERVENTIL
VANNE DE DOSAGE

(30) Priority: 09.12.2014 IT MI20142109
(43) Date of publication of application: 15.06.2016
(73) Proprietor: A.T.P. S.p.A., 41100 Modena (IT)
(72) Inventor: ZACCHE', Vanni, I-41100 MODENA (IT)
(74) Representative: Long, Giorgio

(56) References cited:
- WO-A2-2008/102243
- DE-U1-202005 014 423
- FR-A1- 2 616 512
- JP-U- S61 152 870
- US-A1- 2005 006 617

## Description

The present invention relates to a dispensing valve, in particular for dosing a liquid or gaseous fluid into containers or bottles in bottling plants.

Bottling plants, in particular for consumer beverages, are characterized by the need for high productivity. Most of the plants for industrial production can reach a productivity of 40,000-50,000 bottles per hour. The filling valves used in such plants must therefore not only allow a precise dosage, but also an opening/closing speed that minimizes the downtimes. Essentially, the liquid or gaseous flow should interrupt or should resume upon command, eliminating inertia times. JPS61152870U discloses a valve according to the preamble of claim 1. WO2008/102243 and DE202005014423U disclose other examples of dispensing valves. A problem which normally occurs in these conditions is the onset of water hammers.

Water hammer is a hydraulic phenomenon that occurs in a pipe when a flow of moving liquid inside is abruptly stopped by the sudden closing of a valve or, vice versa, when a closed and under pressure pipe is suddenly opened. It consists of a pressure wave that originates due to the inertia of a moving fluid column which impacts against the wall, for example of a closed valve in a sudden manner. The pressure is a function of the dimensions of the pipe (length and diameter), of the speed and density of the fluid, and of the closing time of the valve. Water hammers can damage both the valve and the pipe.

A problem addressed by the present invention is to provide a system for dispensing a fluid which allows a high productivity, and thus very short reaction times for the interruption of a fluid flow or for its resumption, and which at the same time minimizes or excludes the phenomenon of water hammers.

This and other problems are solved by a filling valve as outlined in the appended claims, the definitions of which are an integral part of the present description.

An object of the invention therefore is a filling valve provided with sealed separation means designed so as to minimize or reduce the phenomenon of water hammers.

A further object of the invention is a dispensing valve provided with an opening/closing system which minimizes frictions and ensures a precise repeatability of the opening/closing times of the valve.

Yet another object of the invention is a dispensing valve which ensures maximum sterility, minimizing contamination from outside.

The dispensing valve of the invention can be used both as separate filling valve in traditional machines, and as a control and dosing valve of a filling fluid in traditional filling machines and in isobaric filling machines. In fact, a plurality of dispensing valves associated with a single filling unit is normally present in this type of plants.

Further features and advantages of the present invention will appear more clearly from the description of some preferred embodiments thereof, made hereinafter by way of a non-limiting example only, with reference to the following figures, in which:

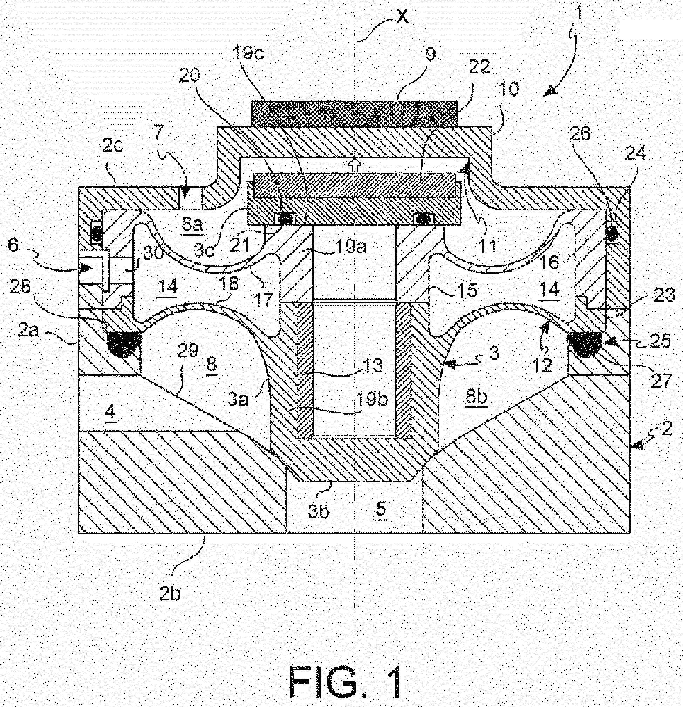

Figure 1 shows a sectional view of the dispensing valve according to the invention.

With reference to the figures, the dispensing valve of the invention, indicated as a whole by reference numeral 1, comprises a valve body 2 having a longitudinal axis X and a shutter 3 contained in said valve body 2 and slidable along said axis X.

The valve body 2 preferably has a substantially cylindrical shape and comprises a lateral wall 2a, a lower wall 2b and an upper wall 2c, which enclose a cavity 8 containing said shutter 3.

The valve body 2 further comprises an input opening 4 of a fluid in said cavity 8, opening 4 being on the lateral wall 2a, and a dispensing opening 5 of the dosing fluid, accessory to the filling, such as for example a beverage or a gas, placed on the lower wall 2b.

A third input opening 6 of a pressurization fluid - a gas or a liquid - is also placed on the lateral wall 2a of the valve body 2, but in a higher position with respect to the input opening 4 of the dosing fluid.

A fourth opening 7 for the input of an actuator fluid - preferably a gas - is instead placed on the upper wall 2c and leads into said cavity 8.

A magnet 9 is placed on the upper wall 2c of the valve body 2, in a substantially central position. Preferably, magnet 9 is placed on the external surface of the upper wall 2c, but it may alternatively be placed on the internal surface, that is, inside cavity 8.

In some embodiments, magnet 9 is a permanent magnet. In other embodiments, magnet 9 is an electromagnet, therefore it will also require a suitable wiring (not shown) for the tensioning of the device.

In the embodiment shown in the figure, the upper wall 2c has a raised central portion 10 which forms a recess 11, typically a cylindrical recess, inside cavity 8. Such a recess 11 is intended to accommodate the upper head of shutter 3 when the valve is in an open condition, as will be shown hereinafter.

The internal surface of the lateral wall 2a of the valve body 2 presents an annular recess 23, extending at the input opening 6 of the pressurization fluid and comprises a lateral seat 24 for a annular sealing 26 and a lower seat 25, for another annular sealing 27, placed on the shoulder 28 joining the annular recess 23 with the lower portion 29 of the valve body 2.

In some embodiments (as shown in the figure), the lower portion 29 of the internal surface of the lateral wall 2a of the valve body 2 has an inward flared profile surrounding the dispensing opening 5.

Shutter 3 comprises a cylindrical body having a lateral wall 3a, a lower head 3b and an upper head 3c. A disk shaped portion 12, arranged on a plane substantially perpendicular to axis X, branches off from the lateral wall 3a. The disk shaped portion 12 divides cavity 8 with seal in a upper portion 8a and in a lower portion 8b.

In some embodiments, the lateral wall 3a is joined with the lower head 3b by means of a beveled profile, adapted to sealably couple with the lower portion 29.

The lateral wall 3a, the disk shaped portion 12 and the lower head 3b are made of a flexible material adapted to ensure a seal. Such a flexible material is typically a polymer material, such as polytetrafluoroethylene (PTFE), modified PTFE (TFM®), a viscoelastic material such as polyurethane, a structured material with a hyperelastic matrix such as a rubber or another elastomer with tissue core.

The cylindrical body of shutter 3 may comprise a core 13 of a rigid material and may be hollow, as shown in the figure.

The disk shaped portion 12 comprises inside an annular chamber 14. The annular chamber 14 is formed between an internal cylindrical wall 15, an external cylindrical wall 16, an upper membrane 17 and a lower membrane 18. In preferred embodiments, the upper membrane 17 has a concavity facing upwards, while the lower membrane 18 has a concavity facing downwards.

In some embodiments, the lateral wall 3a, the lower head 3b and the disk shaped portion 12 are integral, but they are preferably divided in an upper portion 19a and a lower portion 19b, as shown in the figure. This embodiment is preferred since it is more easily achievable.

The upper head 3c is fixed to the upper edge 19c of the cylindrical body and has a seat 20 in which a sealing ring 21 (O-ring) is accommodated.

A plate 22 of a magnetic material with reverse polarity with respect to magnet 9 is arranged on the upper surface of the upper head 3c, so as to establish an attractive force between magnet 9 and plate 22. For example, plate 22 may be made of neodymium iron boron (NdFeB).

In other embodiments, plate 22 may be made of a ferromagnetic material or vice versa, plate 22 will be a magnet and magnet 9 will be replaced by a plate of ferromagnetic material.

The disk shaped portion 12 is accommodated, at the external cylindrical wall 16 thereof, in the annular recess 23, so as to be retained therein. The annular seals 26, 27 ensure the seal to liquids or gases.

The external cylindrical wall 16 comprises a through hole 30 aligned with the input opening 6 of the pressurization fluid, so as to place the annular chamber 14 in flow communication with the outside.

The dispensing valve 1 according to the invention is connected by suitable pipes (not shown) with:
- a tank of a dosing fluid through the input opening 4;
- a source of a pressurization fluid through opening 6;
- a source of an actuator fluid through opening 7.

The operation of the dispensing valve 1 is as follows.

In normal conditions, the dispensing valve is always open, that is, magnet 9 attracts plate 22 in the direction of the arrow shown in the figure, so as to retain the shutter inside recess 11, in abutment against the upper wall 2c of the valve body 2. In this condition, the dosing fluid can freely flow between the input opening 4 and the dispensing opening 5.

On the other hand, when it is desired to interrupt the flow of the dosing fluid, an actuator fluid (typically compressed air) is introduced through opening 7 inside cavity 8 of the valve body 2. The actuator fluid will have a pressure sufficient to overcome the magnetic attraction between magnet 9 and plate 22, so as to slide shutter 3 downwards, thus closing the dispensing opening 5 (operating condition shown in the figure).

During the use of the dispensing valve, a pressurization fluid is also introduced inside the annular chamber 14 through opening 6. The pressurization fluid will have a calibrated pressure so as to act as an elastic system to cushion or eliminate the risk of water hammers caused by the sudden opening/closure of the valve. This is allowed by the flexibility features of the upper 17 and lower 18 membranes.

The pressurization fluid may be compressed air or, in other embodiments (depending on the use of the device), pressurized steam that will have the additional function of creating a sterile interspace between the dispensing area and the upper portion of the valve open towards the outside.

The advantages of the invention are apparent from the description.

The arrangement of a chamber 14 inside the disk shaped portion 12 of shutter 3 allows configuring an efficient system for the cushioning of water hammers, thus allowing a rapid sequence of opening and closing of the valve to be maintained as required by the productivity needs of the plant.

The use of a magnetic attraction system for the valve opening/closing is particularly advantageous, since it is of simple construction, reduces frictions and is fast and repeatable in the execution of the opening/closing cycle.

It is clear that only some particular embodiments of the present invention have been described, and those skilled in the art will be able to make all the necessary modifications for its adaptation to particular applications, without departing from the protection scope of the present invention.

## Claims

1. A dispensing valve (1) comprising:
- a valve body (2), having a longitudinal axis (X), a lateral wall (2a), a lower wall (2b) and an upper wall (2c) and defining a cavity (8), and
- a shutter (3) contained in said cavity (8) and slidable along said axis (X), where the shutter (3) comprises a cylindrical body having a lateral wall (3a), a lower head (3b) and an upper head (3c) and where from the lateral wall (3a) a disk shaped portion (12) branches off dividing with seal said cavity (8) in a upper portion (8a) and in a lower portion (8b), wherein the valve body (2) comprises:
- an input opening (4) of a filling fluid in said cavity (8),
- a dispensing opening (5) of the filling fluid, a magnet (9) being placed on the upper wall (2c) of the valve body (2), in a substantially central position, wherein said disk shaped portion (12) is made of a flexible material and comprises an annular chamber (14) inside in fluid communication with a pressurization fluid, and wherein the valve body (2) further comprises an input opening (6) of a pressurization fluid in said annular chamber (14), **characterised in that**
the valve body (2) comprises an opening (7) to input an actuating fluid in said upper portion (8a) of the cavity (8), wherein a plate (22) made of a magnetic material having opposite polarity with respect to the magnet (9) or of a ferromagnetic material is placed on the upper head (3c) of the shutter (3), in order to establish an attractive force between magnet (9) and plate (22).

2. The dispensing valve (1) according to claim 1, wherein said pressurization fluid is compressed air or pressurized steam, said fluid having a pressure calibrated so as to act as an elastic system in order to cushion or remove the risk of water hammers caused by the sudden valve opening/closure.

3. The dispensing valve (1) according to claim 1 or 2, wherein said flexible material is chosen among polytetrafluoroethylene (PTFE), modified PTFE (TFM®), a viscoelastic material such as polyurethane and a structured material with hyperelastic matrix such as a rubber or other elastomeric material with a tissue core.

4. The dispensing valve (1) according to claim 1, wherein the magnet (9) is a permanent magnet or an electromagnet.

5. The dispensing valve (1) according to any claim 1 to 4, wherein the upper wall (2c) of the valve body (2) has a raised central portion (10) forming a recess (11) inside the cavity (8), the recess (11) being intended to house the upper head (3c) of the shutter (3) when the valve is in an open condition.

6. The dispensing valve (1) according to any claim 1 to 5, wherein the internal surface of the lateral wall (2a) of the valve body (2) has an annular recess (23) extending at the input opening (6) of the pressurization fluid and comprises a lateral seat (24) for a annular sealing (26) and a lower seat (25) for another annular sealing (27), placed on the shoulder (28) joining the annular recess (23) with the lower portion (29) of the valve body (2).

7. The dispensing valve (1) according to claim 8, wherein the annular chamber (14) is formed between an internal cylindrical wall (15), an external cylindrical wall (16), an upper membrane (17) and a lower membrane (18) and wherein the disk shaped portion (12) is housed, at its external cylindrical wall (16), in the annular recess (23), so as to be retained therein.

8. A filling unit comprising one or more dispensing valves (1) according to any claim 1 to 7.

9. A filling machine comprising a plurality of filling units according to claim 8.

## Patentansprüche

1. Abgabeventil (1), umfassend:
- einen Ventilkörper (2), welcher eine longitudinale Achse (X), eine laterale Wand (2a), eine untere Wand (2b) und eine obere Wand (2c) aufweist und einen Hohlraum (8) definiert, und
- einen Verschluss (3), welcher in dem Hohlraum (8) enthalten und entlang der Achse (X) verschiebbar ist, wobei der Verschluss (3) einen zylindrischen Körper umfasst, welcher eine laterale Wand (3a), einen unteren Kopf (3b) und einen oberen Kopf (3c) aufweist, und wobei von der lateralen Wand (3a) ein scheibenförmiger Abschnitt (12) abzweigt, welcher den Hohlraum (8) mit einer Dichtung in einen oberen Abschnitt (8a) und in einen unteren Abschnitt (8b) teilt, wobei der Ventilkörper (2) umfasst:
- eine Eingabeöffnung (4) eines Füllfluides in den Hohlraum (8),
- eine Abgabeöffnung (5) des Füllfluides, wobei ein Magnet (9) in einer im Wesentlichen zentralen Position an der oberen Wand (2c) des Ventilkörpers (2) platziert ist,
wobei der scheibenförmige Abschnitt (12) aus einem flexiblen Material hergestellt ist und innerhalb in Fluidverbindung mit einem Druckfluid eine ringförmige Kammer (14) umfasst,
und wobei der Ventilkörper (2) ferner eine Eingabeöffnung (6) eines Druckfluides in die ringförmigen Kammer (14) umfasst,
**dadurch gekennzeichnet, dass** der Ventilkörper (2) eine Öffnung (7) umfasst, um ein Betätigungsfluid in den oberen Abschnitt (8a) des Hohlraums (8) einzugeben, wobei eine Platte (22), welche aus einem magnetischen Material mit einer entgegengesetzten Polarität in Bezug auf den Magneten (9) oder aus einem ferromagnetischen Material hergestellt ist, an dem oberen Kopf (3c) des Verschlusses (3) platziert ist, um eine Anziehungskraft zwischen dem Magneten (9) und der Platte (22) zu schaffen.

2. Abgabeventil (1) nach Anspruch 1, wobei das Druckfluid komprimierte Luft oder unter Druck stehender Dampf ist, wobei das Fluid einen Druck aufweist, welcher derart kalibriert ist, dass er als ein elastisches System wirkt, um das Risiko von durch das plötzliche Ventilöffnen/-schließen bedingten Wasserschlägen zu dämpfen oder zu entfernen.

3. Abgabeventil (1) nach Anspruch 1 oder 2, wobei das flexible Material aus Polytetrafluorethylen (PTFE), modifiziertem PTFE (TFM®), einem viskoelastischen Material, wie z. B. Polyurethan, und einem strukturierten Material mit einer hyperelastischen Matrix, wie z. B. einem Kautschuk oder einem anderen elastomeren Material mit einem Gewebekern, ausgewählt ist.

4. Abgabeventil (1) nach Anspruch 1, wobei der Magnet (9) ein Permanentmagnet oder ein Elektromagnet ist.

5. Abgabeventil (1) nach einem der Ansprüche 1 bis 4, wobei die obere Wand (2c) des Ventilkörpers (2) einen erhöhten zentralen Abschnitt (10) aufweist, welcher innerhalb des Hohlraums (8) eine Ausnehmung (11) bildet, wobei die Ausnehmung (11) vorgesehen ist, um den oberen Kopf (3c) des Verschlusses (3) aufzunehmen, wenn das Ventil in einem offenen Zustand ist.

6. Abgabeventil (1) nach einem der Ansprüche 1 bis 5, wobei die innere Fläche der lateralen Wand (2a) des Ventilkörpers (2) eine ringförmige Ausnehmung (23) aufweist, welche sich an der Eingabeöffnung (6) des Druckfluides erstreckt und einen lateralen Sitz (24) für eine ringförmige Dichtung (26) und einen unteren Sitz (25) für eine weitere ringförmige Dichtung (27) umfasst, welcher an der Schulter (28) platziert ist, welche die ringförmige Ausnehmung (23) mit dem unteren Abschnitt (29) des Ventilkörpers (2) verbindet.

7. Abgabeventil (1) nach Anspruch 8, wobei die ringförmige Kammer (14) zwischen einer inneren zylindrischen Wand (15), einer äußeren zylindrischen Wand (16), einer oberen Membran (17) und einer unteren Membran (18) gebildet ist und wobei der scheibenförmige Abschnitt (12) an seiner äußeren zylindrischen Wand (16) derart in der ringförmigen Ausnehmung (23) aufgenommen ist, dass er darin gehalten ist.

8. Fülleinheit, umfassend ein oder mehrere Abgabeventile (1) nach einem der Ansprüche 1 bis 7.

9. Füllmaschine, umfassend eine Mehrzahl von Fülleinheiten nach Anspruch 8.

## Revendications

1. Vanne de distribution (1) comprenant :
- un corps de vanne (2), ayant un axe longitudinal (X), une paroi latérale (2a), une paroi inférieure (2b) et une paroi supérieure (2c) et définissant une cavité (8), et
- un obturateur (3) contenu dans ladite cavité (8) et pouvant coulisser selon ledit axe (X), où l'obturateur (3) comprend un corps cylindrique ayant une paroi latérale (3a), une tête inférieure (3b) et une tête supérieure (3c) et où depuis la paroi latérale (3a) une portion en forme de disque (12) bifurque divisant avec un joint ladite cavité (8) en une portion supérieure (8a) et en une portion inférieure (8b), dans laquelle le corps de vanne (2) comprend :
- une ouverture d'entrée (4) d'un fluide de remplissage dans ladite cavité (8),
- une ouverture de distribution (5) du fluide de remplissage, un aimant (9) étant placé sur la paroi supérieure (2c) du corps de vanne (2), dans une position sensiblement centrale, dans laquelle ladite portion en forme de disque (12) est réalisée en un matériau flexible et comprend une chambre annulaire (14) à l'intérieur en communication fluidique avec un fluide de pressurisation,
et dans laquelle le corps de vanne (2) comprend en outre une ouverture d'entrée (6) d'un fluide de pressurisation dans ladite chambre annulaire (14), **caractérisée en ce que**
le corps de vanne (2) comprend une ouverture (7) pour entrer un fluide d'actionnement dans ladite portion supérieure (8a) de la cavité (8), dans laquelle une plaque (22) réalisée en un matériau magnétique ayant une polarité opposée par rapport à l'aimant (9) ou en un matériau ferromagnétique est placée sur la tête supérieure (3c) de l'obturateur (3), afin d'établir une force d'attraction entre l'aimant (9) et la plaque (22).

2. Vanne de distribution (1) selon la revendication 1, dans laquelle ledit fluide de pressurisation est de l'air comprimé ou de la vapeur pressurisée, ledit fluide ayant une pression étalonnée de façon à servir de système élastique afin d'amortir ou d'éliminer le risque de coups de bélier provoqués par l'ouverture/la fermeture de vanne soudaine.

3. Vanne de distribution (1) selon la revendication 1 ou 2, dans laquelle ledit matériau flexible est choisi parmi le polytétrafluoroéthylène (PTFE), le PTFE modifié (TFM®), un matériau viscoélastique tel que le polyuréthane et un matériau structuré avec une matrice hyperélastique tel qu'un caoutchouc ou autre matériau élastomérique avec une âme en tissu.

4. Vanne de distribution (1) selon la revendication 1, dans laquelle l'aimant (9) est un aimant permanent ou un électroaimant.

5. Vanne de distribution (1) selon l'une quelconque des revendications 1 à 4, dans laquelle la paroi supérieure (2c) du corps de vanne (2) a une portion centrale surélevée (10) formant un évidement (11) à l'intérieur de la cavité (8), l'évidement (11) étant destiné à loger la tête supérieure (3c) de l'obturateur (3) lorsque la vanne est dans un état ouvert.

6. Vanne de distribution (1) selon l'une quelconque des revendications 1 à 5, dans laquelle la surface interne de la paroi latérale (2a) du corps de vanne (2) a un évidement annulaire (23) s'étendant au niveau de l'ouverture d'entrée (6) du fluide de pressurisation et comprend un siège latéral (24) pour une étanchéité annulaire (26) et un siège inférieur (25) pour une autre étanchéité annulaire (27), placés sur l'épaulement (28) assemblant l'évidement annulaire (23) à la portion inférieure (29) du corps de vanne (2).

7. Vanne de distribution (1) selon la revendication 8, dans laquelle la chambre annulaire (14) est formée entre une paroi cylindrique interne (15), une paroi cylindrique externe (16), une membrane supérieure (17) et une membrane inférieure (18) et dans laquelle la portion en forme de disque (12) est logée, au niveau de sa paroi cylindrique externe (16), dans l'évidement annulaire (23), de façon à y être retenue.

8. Unité de remplissage comprenant une ou plusieurs vannes de distribution (1) selon l'une quelconque des revendications 1 à 7.

9. Machine de remplissage comprenant une pluralité d'unités de remplissage selon la revendication 8.
